# EUROPÄISCHE PATENTSCHRIFT

(11) **EP 1 896 287 B1**
(45) Veröffentlichungstag und Bekanntmachung des Hinweises auf die Patenterteilung: **10.02.2010**
(21) Anmeldenummer: 06742404.4
(22) Anmeldetag: 08.06.2006
(51) Int. Cl.: B60N 2/02

(54) **SITZTIEFENVERSTELLUNG FÜR EINEN KRAFTFAHRZEUGSITZ**
DEVICE FOR ADJUSTING THE HEIGHT OF A SEAT FOR A MOTOR VEHICLE SEAT
DISPOSITIF DE REGLAGE DE LA PROFONDEUR D'UN SIEGE DE VEHICULE AUTOMOBILE

(30) Priorität: 21.06.2005 DE 102005029665
(43) Veröffentlichungstag der Anmeldung: 12.03.2008
(73) Patentinhaber: Brose Fahrzeugteile GmbH & Co. KG, Coburg, 96450 Coburg (DE)
(72) Erfinder: THIEL, Heiko, 96242 Sonnefeld (DE); HOFMANN, Jochen, 96257 Marktgraitz (DE); KRÖNER, Gregor, 96120 Bischberg (DE)
(74) Vertreter: Baumgärtel, Gunnar
(86) Internationale Anmeldenummer: PCT/DE2006/000994
(87) Internationale Veröffentlichungsnummer: WO 2006/136133

(56) Entgegenhaltungen:
- DE-A1- 19 901 076
- FR-A1- 2 754 496
- US-A1- 2005 061 941

## Beschreibung

Die Erfindung betrifft eine Sitztiefenverstellung für einen Kraftfahrzeugsitz nach dem Oberbegriff des Patentanspruchs 1.

Eine derartige Sitztiefenverstellung umfasst ein sitzgestellfest anzuordnendes Basiselement sowie ein entlang einer Verstellrichtung verschieblich am Basiselement gelagertes Stützelement, das zum Abstützen bestimmter Körperteile eines Sitzbenutzers, z. B. der Oberschenkel, dient, wobei Gewichtskräfte entlang einer Abstützrichtung auf das Stützelement wirken. Dem Stützelement sind Führungsmittel zugeordnet, mittels derer das Stützelement am Basiselement entlang der Verstellrichtung beweglich, insbesondere verschieblich, geführt ist. Eine derartige Sitztiefenverstellung ist aus der FR-A1-2 754 496 bekannt.

Eine solche Sitztiefenverstellung kann insbesondere als sogenannte Sitzkissentiefenverstellung verwendet werden, wobei das Basiselement einen Bestandteil eines Polsterträgers bildet, auf dem ein in seiner Gebrauchsposition im Wesentlichen waagerecht orientiertes Sitzpolster angeordnet ist, und das Stützelement als Schenkelstütze zusammen mit einem hierauf angeordneten Zusatzpolster entlang einer Verstellrichtung, insbesondere der sogenannten Sitzlängsrichtung, verschiebbar ist, um die effektive Länge des gesamten für einen Sitzbenutzer zur Verfügung stehenden Sitzkissens einzustellen.

Die kleinste einstellbare effektive Länge des Sitzkissens in Sitzlängsrichtung entspricht dabei dem sogenannten minimalen Auszug des Stützelementes bezüglich des Basiselementes und die maximal einstellbare effektive Länge des Sitzpolsters entspricht dem sogenannten maximalen Auszug des Stützelementes bezüglich des Basiselementes.

Die Führungsmittel, welche eine Verstellung des Stützelementes bezüglich des Basiselementes zur Einstellung der effektiven Länge eines Sitzkissens ermöglichen, sind während einer Einstellung üblicherweise mit erheblichen Gewichtskräften eines auf dem entsprechenden Fahrzeugsitz befindlichen Insassen belastet. Daher umfassen die Führungsmittel in der Regel zwei in Verstellrichtung erstreckte Führungskulissen, um eine möglichst geradlinige Verstellbewegung zu gewährleisten, ohne dass beim Fahrzeuginsassen das Gefühl eines Verkippens der Schenkelstütze auftritt. Dies kann jedoch zu einem Verklemmen der Führungsmittel führen, da bei einem solchen System eine Tendenz zur Überbestimmung besteht.

Der Erfindung liegt daher das Problem zugrunde, eine Sitztiefenverstellung der eingangs genannten Art im Hinblick auf eine leichtgängige und zugleich definierte, möglichst kippfreie Verstellung des Sitzelementes bezüglich des Basiselementes zu verbessern.

Dieses Problem wird erfindungsgemäß durch die Schaffung einer Sitztiefenverstellung mit den Merkmalen des Patentanspruchs 1 gelöst.

Danach umfassen die Führungsmittel eine erste Führungseinrichtung, an der sich das Stützelement an dem Basiselement abstützt und an der das Stützelement und das Basiselement mit einem gewissen Spiel senkrecht zur Verstellrichtung des Stützelementes (und senkrecht zur Abstützrichtung der Gewichtskräfte, entlang der bei bestimmungsgemäßem Gebrauch der Sitztiefenverstellung Gewichtskräfte eines Fahrzeuginsassen auf die Sitztiefenverstellung einwirken) zusammenwirkt. Ferner weisen die Führungsmittel eine zweite Führungseinrichtung auf, mit der das Stützelement bezüglich des Basiselementes - entlang der senkrecht zur Verstellrichtung und zur Abstützrichtung verlaufenden Raumrichtung betrachtet - im Wesentlichen spielfrei geführt ist.

Die erfindungsgemäße Lösung beruht auf der Erkenntnis, dass eine im Wesentlichen spielfreie Führung des Stützelementes (z. B. in Form einer Schenkelstütze) einer Sitztiefenverstellung bezüglich eines Basiselementes - ohne die Gefahr eines Verklemmens wegen Überbestimmung der Führungsmittel - möglich ist, wenn die Aufnahme der durch einen Fahrzeuginsassen im Gebrauch ausgeübten Gewichtskräfte einerseits und die Sicherstellung einer Spielfreiheit der Führung andererseits auf zwei unterschiedliche Führungseinrichtungen verteilt wird.

Die erste Führungseinrichtung, welche im Gebrauch der Sitztiefenverstellung auftretende Gewichtskräfte aufnehmen soll, so dass diese von dem Stützelement in das Basiselement und damit in das Sitzgestell weitergeleitet werden, ist entlang einer (im Wesentlichen horizontalen) Richtung erstreckt, die sowohl senkrecht zur Verstellrichtung des Stützelementes (in der Regel entsprechend einer Sitzlängsachse bzw. Fahrzeuglängsachse im eingebauten Zustand des Fahrzeugsitzes) als auch senkrecht zur Wirkrichtung der Gewichtskräfte (welche bei einer Schenkelstütze - bezogen auf den in ein Kraftfahrzeug eingebauten Zustand - der vertikalen Fahrzeugachse entsprechen) verläuft. Aufgrund des verbleibenden Spiels, welches bei einem im Wesentlichen ebenen Stützelement die senkrecht zur Verstellrichtung in der Ebene des Stützelementes liegende Raumrichtung betrifft, kann eine zweite Führungseinrichtung verwendet werden, die aufgrund ihrer Konstruktion eine im Wesentlichen spielfreie Verstellung des Stützelementes bezüglich des Basiselementes gewährleistet, ohne dass die Gefahr einer Überbestimmung der Führungsmittel besteht; es wird also kein Verklemmen der Führungsmittel im Betrieb vermieden.

Die erste Führungseinrichtung umfasst bevorzugt mindestens zwei quer zur Verstellrichtung des Stützelementes (und quer zur Abstützrichtung der Gewichtskräfte) voneinander beabstandete Längsführungen, die sich jeweils entlang der Verstellrichtung erstrecken und zwischen denen die zweite Führungseinrichtung liegt. Hierdurch wird eine maximale Entlastung der mittleren, quer zur Verstellrichtung spielfreien zweiten Führungseinrichtung von Kippkräften ermöglicht, die durch die Gewichtskräfte eines Sitzbenutzers, insbesondere bei ungleichmäßiger Belastung der Schenkelstütze, hervorgerufen werden und die bei der vorbeschriebenen Auslegung und Anordnung der ersten Führungseinrichtung durch die beiden äußeren Längsführungen der spielbehafteten ersten Führungseinrichtung aufgenommen werden.

Gemäß einer bevorzugten Ausführungsform der Erfindung umfasst die erste Führungseinrichtung, insbesondere jede Längsführung der ersten Führungseinrichtung, mindestens ein Führungselement, das in eine in Verstellrichtung erstreckte Führungsbahn eingreift und in Verstellrichtung beweglich in der Führungsbahn gelagert ist. Bei dieser kann es sich beispielsweise um eine Führungskulisse handeln, in die das zugeordnete Führungselement formschlüssig eingreift. Dabei ist die Anordnung derart, dass eine der beiden besagten Komponenten der ersten Führungseinrichtung, also das Führungselement oder die Führungsbahn, am Stützelement und die andere der beiden Komponenten der Führungseinrichtung am Basiselement angeordnet ist. Die mit den Führungselementen versehene Komponente stützt sich bei dieser Ausführungsform der Erfindung derart im Bereich der Führungsbahnen an der anderen Komponente der anderen Führungseinrichtung ab, dass hierbei die Gewichtskräfte eines Sitzbenutzers aufgenommen und über das Basiselement ins Sitzgestell weitergeleitet werden können. Senkrecht zur Verstellrichtung sowie zur Wirkrichtung jener Gewichtskräfte ist das jeweilige Führungselement dabei mit Spiel in der zugeordneten Führungsbahn gelagert.

Zur Gewährleistung einer im Wesentlichen spielfreien Führung des Stützelementes am Basiselement umfasst die zusätzlich vorgesehene zweite Führungseinrichtung, welche sich bevorzugt zwischen zwei Längsführungen der ersten Führungseinrichtung erstreckt, zwei in Verstellrichtung zueinander bewegliche Führungsprofile, die senkrecht zur Verstellrichtung des Stützelementes sowie senkrecht zur Abstützrichtung der Gewichtskräfte spielfrei ineinander greifen. Hierbei kann es sich beispielsweise um im Querschnitt U-förmige Führungsprofile (Führungsschienen) handeln, die zusätzlich abgewinkelte freie Enden aufweisen.

Über die beiden in Verstellrichtung zueinander beweglichen Führungsprofile können sich das Stützelement und das Basiselement quer zur Verstellrichtung aneinander abstützen. Von besonderer Bedeutung ist dabei eine spielfreie Abstützung der beiden zueinander beweglichen Führungsprofile entlang der horizontalen Fahrzeugquerrichtung, also entlang einer Richtung, die sich sowohl senkrecht zur Verstellrichtung des Stützelementes bezüglich des Basiselementes als auch senkrecht zur Wirkrichtung der Gewichtskräfte (eines Sitzbenutzers) erstreckt.

Weiterhin sind Mittel zur Verriegelung einer zuvor eingestellten Position des Stützelementes bezüglich des Basiselementes vorgesehen, und zwar insbesondere unter Verwendung eines Verriegelungselementes, das durch Verschwenken (z. B. um eine in Verstellrichtung des Sitzelementes erstreckte Achse) ver- und entriegelbar ist, indem mindestens ein Sperrzahn des Verriegelungselementes wahlweise mit mindestens einer Mehrzahl entlang der Verstellrichtung hintereinander angeordneter Raststellen in Eingriff gebracht wird. Bei den Raststellen kann es sich um Rastöffnungen handeln, die an einem der Führungsprofile, z. B. an der Basisfläche eines im Querschnitt U-förmigen Führungsprofiles ausgebildet sind.

Das Verriegelungselement ist dann bevorzugt am anderen der beiden Führungsprofile angeordnet, vorteilhaft innerhalb eines vom Führungsprofil zumindest teilweise umschlossenen Raumes, z. B. zwischen den beiden seitlichen Schenkeln eines im Querschnitt im Wesentlichen U-förmigen Führungsprofiles.

Gemäß einer bevorzugten Weiterbildung dieser Ausführungsform der Erfindung weist das andere Führungsprofil (insbesondere in seiner Basisfläche) ebenfalls Öffnungen auf, die von dem mindestens einen Sperrzahn des Verriegelungselementes im verriegelten Zustand (zusätzlich zu den Raststellen am einen Führungsprofil) durchgriffen werden (zweischnittige Verriegelung).

Um eine unbeabsichtigte Neueistellung der Sitztiefenverstellung zu verhindern, sind die Verriegelungsmittel in Richtung auf den verriegelten Zustand elastisch vorgespannt, z. B. mittels eines elastischen Elementes, das auf das Verriegelungselement so einwirkt, dass es mit mindestens einer zugeordneten Raststelle in Eingriff steht.

Insbesondere durch die Kombination der Verschwenkbarkeit der Verriegelungsmittel mit der zweischnittigen Ausführung der Verriegelungsmechanik wird erreicht, dass die Verriegelungsmittel auf Scherung und nicht auf Biegung beansprucht werden. Hierdurch können die Komponenten der Verriegelungsmittel, also insbesondere das Verriegelungselement mit den daran vorgesehenen Sperrzähnen aus Kunststoff ausgeführt werden.

Bei einer mittels eines (am Stützelement angeordneten) Betätigungsgriffes manuell betätigbaren Sitztiefenverstellung dient der Betätigungsgriff bevorzugt gleichzeitig zur Entriegelung der Verriegelungsmittel. Hierzu kann der in geeigneter Weise beweglich, insbesondere schwenkbar, gelagerte Betätigungsgriff einen Fortsatz aufweisen, der bei Ausübung einer Kraft in Verstellrichtung auf den Betätigungsgriff derart auf ein Verriegelungselement der Verriegelungsmittel einwirkt, dass die Verriegelungsmittel in den entriegelten Zustand überführt werden.

Ein Kraftfahrzeugsitz mit einer erfindungsgemäß ausgestalteten Sitztiefenverstellung ist durch die Merkmale des Patentanspruchs 33 charakterisiert.

Weitere Einzelheiten und Vorteile der Erfindung werden bei der nachfolgenden Beschreibung eines Ausführungsbeispieles anhand der Figuren deutlich werden.

Es zeigen:

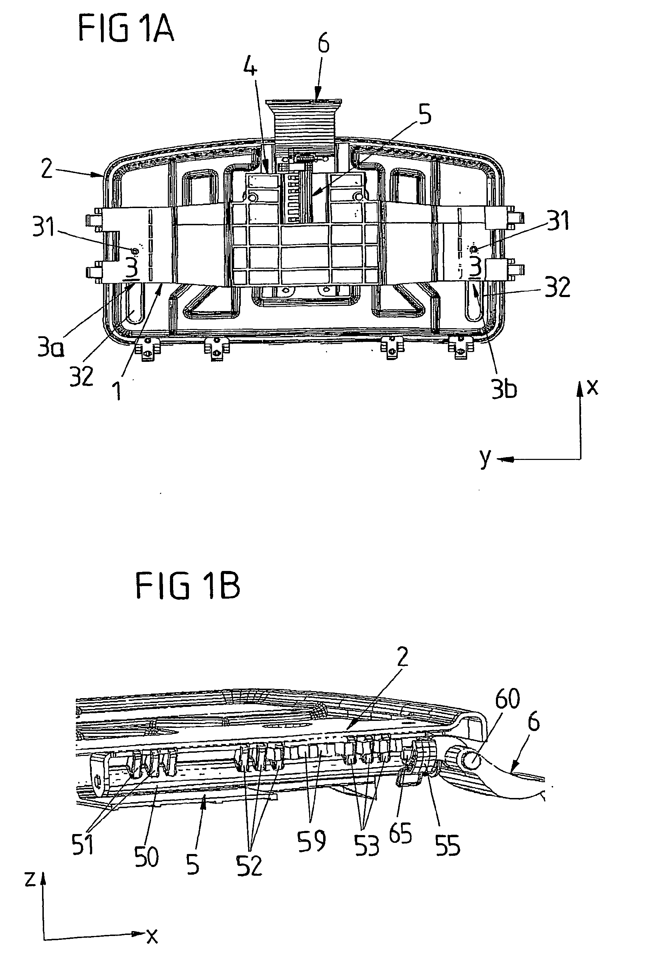

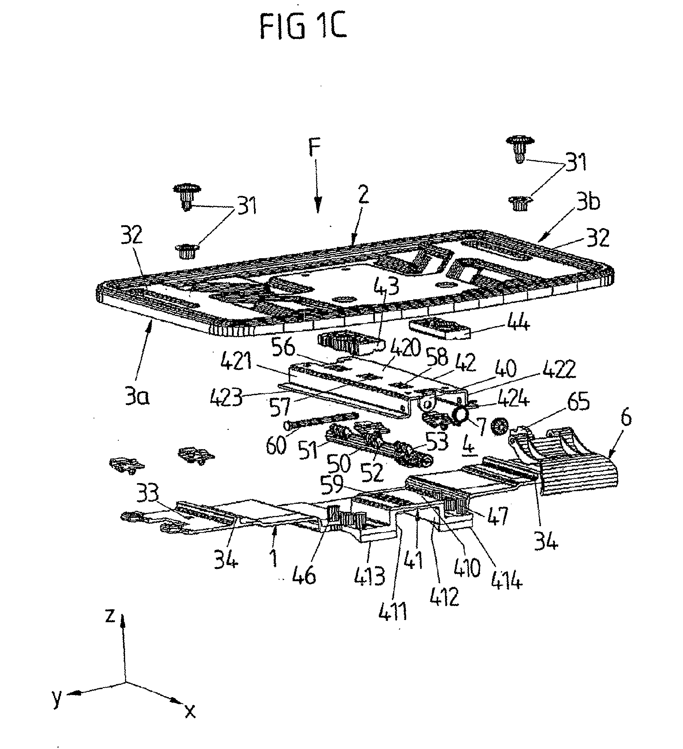

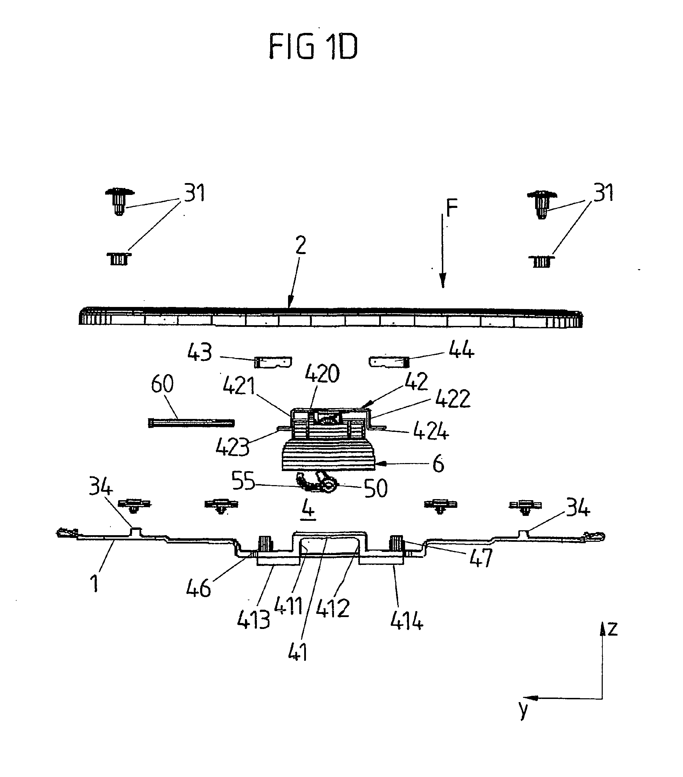

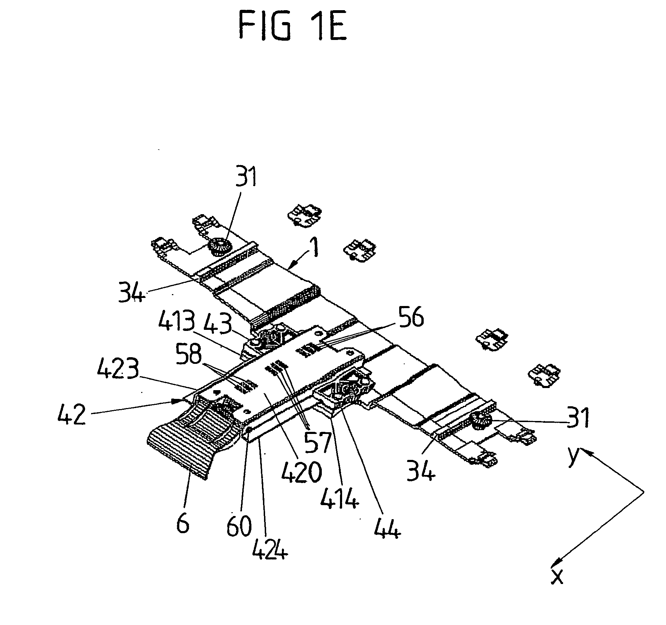

- Fig. 1 a: ein Basiselement und ein Stützelement einer Sitztiefenverstellung, verriegelt im minimal ausgezogenen Zustand des Stützelementes, in einer Draufsicht;
- Fig. 1 b: einen Längsschnitt durch die Anordnung aus Figur 1 a;
- Fig. 1 c: eine perspektivische Explosionsdarstellung der Anordnung aus Figur 1 a;
- Fig. 1d: eine frontale Explosionsdarstellung der Anordnung aus Figur 1a;
- Fig. 1e: eine perspektivische Darstellung der Anordnung aus Figur 1a ohne Stützelement;
- Fig. 2a: die Anordnung aus Figur 1a, verriegelt bei maximal ausgezogenem Stützelement, in einer Draufsicht;
- Fig. 2b: einen Längsschnitt durch die Anordnung aus Figur 2a;
- Fig. 2c und 2d: zwei perspektivische Darstellungen der Anordnung aus Figur 2a ohne Stützelement;
- Fig. 3: einen Längsschnitt durch die Anordnung aus Figur 1a im entriegelten Zustand;
- Fig. 4: einen Längsschnitt durch die Anordnung aus Figur 2a im entriegelten Zustand;
- Fig.5: eine schematische Darstellung eines Fahrzeugsitzes mit einer Sitztiefenverstellung.

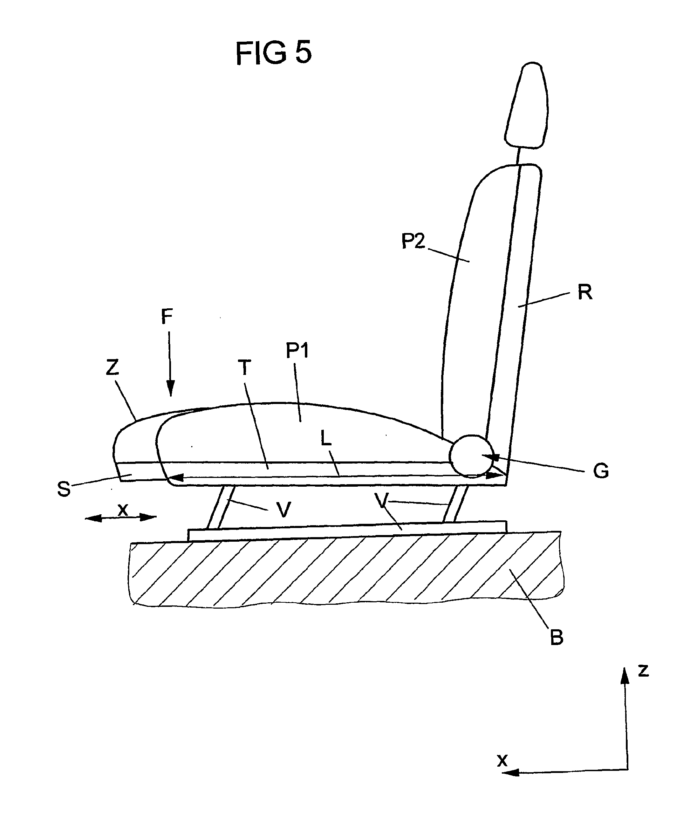

In Figur 5 ist ein Sitzgestell G eines Kraftfahrzeugsitzes dargestellt, das einen über einen Verstellmechanismus V an einer Bodenbaugruppe B eines Kraftfahrzeugs anordenbaren Sitzträger T sowie eine schwenkbar am Sitzträger T angelenkte Rückenlehne R umfasst. Der Sitzträger T trägt ein Sitzpolster P1, auf dem ein Fahrzeuginsasse Platz nehmen kann, und die Rückenlehne R trägt ein Lehnenpolster P2 zum Abstützen des Rückens eines Sitzbenutzers.

Bei dem in Figur 5 schematisch dargestellten Fahrzeugsitz ist die effektive Länge L des für einen Sitzbenutzer zur Verfügung stehenden Sitzkissens in Sitzlängsrichtung x (entsprechend der Fahrzeuglängsrichtung bzw. Fahrtrichtung bei einem in ein Kraftfahrzeug eingebauten Sitz) dadurch einstellbar, dass am Sitzträger längsverschieblich ein Stützelement S gelagert ist, welches ein an das Sitzpolster P1 in Sitzlängsrichtung x anschließendes Zusatzpolster Z trägt und welches in Sitzlängsrichtung x verschieblich ist. Die effektive Länge des gesamten Sitzkissens P1, Z, auf dem ein Fahrzeuginsasse Platz nehmen kann, hängt dabei davon ab, wieweit das Stützelement S in Sitzlängsrichtung x ausgezogen ist.

Vorliegend handelt es sich bei dem Stützelement S um eine sogenannte Schenkelstütze, die zum Abstützen der Oberschenkel eines Sitzbenutzers dient und die zur Einstellung der effektiven Länge L des gesamten Sitzkissens, also für eine sogenannte Sitzkissentiefenverstellung, in Sitzlängsrichtung x beweglich gelagert ist. Die kleinste einstellbare effektive Länge L des Sitzkissens P, Z in Sitzlängsrichtung x entspricht dabei dem sogenannten minimalen Auszug des Stützelementes S und die maximal einstellbare effektive Länge L des Sitzkissens P, Z entspricht dem sogenannten maximalen Auszug des Stützelementes S.

Befindet sich ein Fahrzeuginsasse auf dem in Figur 5 dargestellten Fahrzeugsitz, so wirken auf das Sitzpolster P1 und speziell auch auf das Zusatzpolster Z und die Schenkelstütze S Gewichtskräfte F entlang der vertikalen Richtung z. Diese entspricht in etwa der Richtung einer aufrecht eingestellten Rückenlehne R eines Kraftfahrzeugssitzes bzw. der sogenannten vertikalen Fahrzeugachse - bezogen auf den in ein Kraftfahrzeug eingebauten Fahrzeugsitz.

Ein konkretes Ausführungsbeispiel eines Mechanismus für die Verstellung des Stützelementes S wird nachfolgend anhand der Figuren 1a bis 4 beschrieben werden. Dabei lässt sich der anhand der Figuren 1a bis 4 dargestellte Mechanismus für die Sitztiefenverstellung auch auf andere Baugruppen eines Fahrzeugsitzes anwenden als die in Figur 5 beispielhaft dargestellte Sitzkissentiefenverstellung.

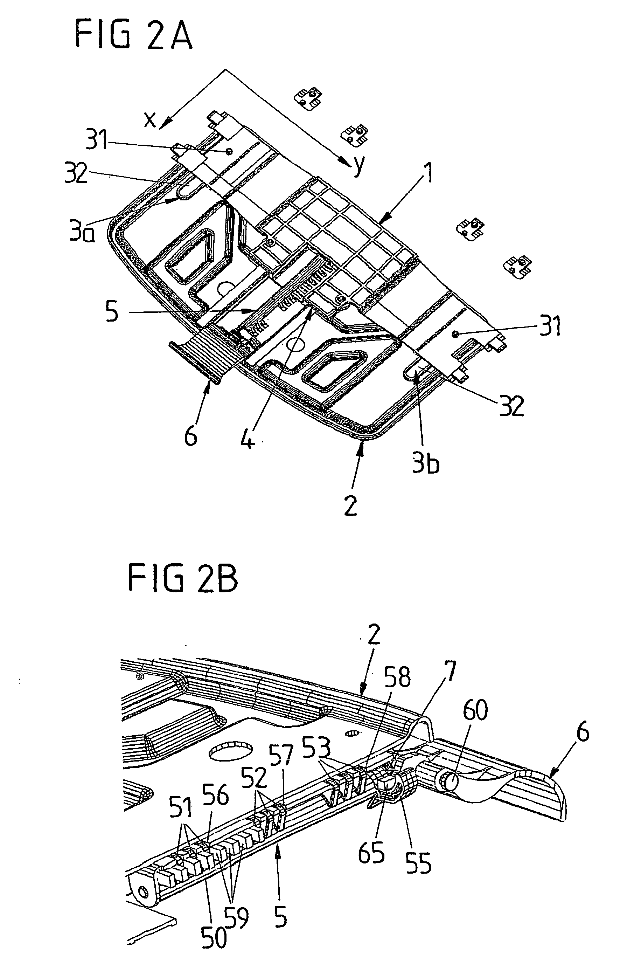

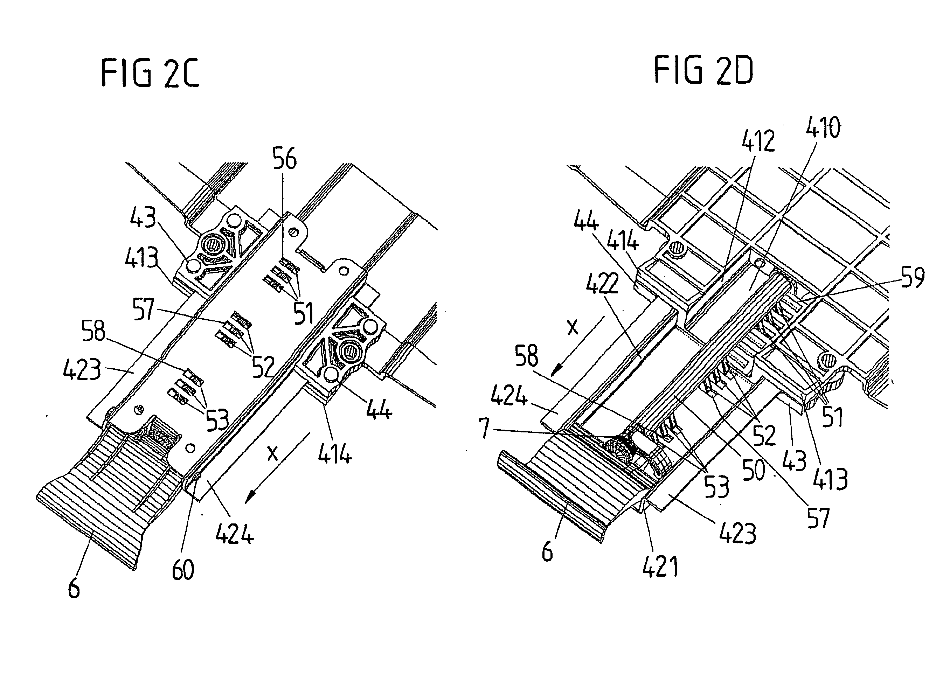

In den Figuren 1a bis 1e sowie 2a bis 2d ist eine bei dem in Figur 5 schematisch dargestellten Fahrzeugsitz einsetzbare Sitztiefenverstellung gezeigt, und zwar einerseits bei einem minimalem Auszug des Stützelementes, entsprechend der geringsten einstellbaren effektiven Länge L des gesamten Sitzkissens P1, Z (Figuren 1a bis 1e) und andererseits bei einem maximalen Auszug des Stützelementes, entsprechend der größten einstellbaren effektiven Länge L des gesamten Sitzkissens P1, Z aus Figur 5 (Figuren 2a bis 2d). In beiden Fällen ist das jeweilige als Schenkelstütze dienende Stützelement 2 in dem eingestellten (minimalen oder maximalen) Auszug bezüglich eines sitzgestellfest anzuordnenden Basiselementes 1 verriegelt.

Bei der nachfolgenden Beschreibung wird jeweils zugleich auf die Figuren 1a bis 1e einerseits sowie die Figuren 2a bis 2d andererseits Bezug genommen. Beide Gruppen an Figuren zeigen eine identische Sitztiefenverstellung im verriegelten Zustand; der Unterschied besteht lediglich darin, dass in den Figuren 1a bis 1e der einem minimalen Auszug des Stützelementes entsprechende Zustand und in den Figuren 2a bis 2d der einem maximalen Auszug des Stützelementes entsprechende Zustand dargestellt ist.

Bei dem Basiselement 1 handelt es sich um ein (Profil-) Teil, bestehend vorzugsweise aus Kunststoff oder ggf. aus Blech, welches am Sitzträger T eines Kraftfahrzeugsitzes der in Figur 5 dargestellten Art zu befestigen ist. Auf diesem sitzgestellfest anzuordnenden Basiselement 1 ist in Sitzlängsrichtung x verschieblich ein bei einem Fahrzeugsitz der in Figur 5 dargestellten Art als Schenkelstütze S dienendes, z.B. als Blechteil ausgebildetes, Stützelement 2 angeordnet. Hierfür sind zwei separate Führungseinrichtungen 3, 4 vorgesehen.

Eine erste Führungseinrichtung 3, die zur Führung des Stützelementes 2 bezüglich des Basiselementes 1 in Sitzlängsrichtung x dient, umfasst zwei Längsführungen 3a, 3b, die quer zur Verstellrichtung x (welche mit der Sitzlängsrichtung x zusammenfällt) des Stützelementes 2 sowie quer zur Wirkrichtung z der im Normalgebrauch auf das Stützelement 2 ausgeübten Gewichtskräfte F voneinander beabstandet an den seitlichen Rändern des Basiselementes 1 und des Stützelementes 2 vorgesehen sind. Jede der beiden Längsführungen 3a, 3b umfasst eine in Verstellrichtung x erstreckte Führungsbahn 32 in Form einer als Langloch ausgebildeten Kulissenführung, in die jeweils ein Führungselement 31 längsverschieblich eingreift, das am Basiselement 1 festgelegt ist. Das jeweilige Führungselement 31 wird dabei gebildet durch eine mittels eines Gewindeelementes (Schraube) an einer Gewindebohrung 33 des Basiselementes 1 befestigte Führungshülse. Das jeweilige Führungselement 31 ist dabei derart bezüglich der zugeordneten Führungsbahn 32 dimensioniert, dass ein vorgegebenes Mindestspiel entlang der senkrecht zur Verstellrichtung x und senkrecht zur Abstützrichtung z der Gewichtskräfte F erstreckten horizontalen Querachse y vorliegt.

Im Bereich der beiden Längsführungen 3a, 3b verläuft jeweils ein längserstreckter Stützbereich 34, über den sich das Stützelement 2 in der (vertikalen) Richtung z an dem Basiselement 1 abstützen kann, entlang der auf das Stützelement 2 im Normalgebrauch als Schenkelstütze Gewichtskräfte F einwirken, die es gegen das Basiselement 1 drücken, und zwar insbesondere gegen die beiden im Bereich der Längsführungen 3a, 3b vorgesehenen, längserstreckten Stützbereiche 34.

Im Ergebnis ermöglichen die beiden seitlichen Längsführungen 3a, 3b eine Führung des Schutzelementes 2 bezüglich des Basiselementes 1 in Verstellrichtung x, wobei ein gewisses horizontales Spiel quer zu der Verstellrichtung x vorliegt und wobei außerdem im Bereich der Längsführungen 3a, 3b mittels am Basiselement 1 vorgesehener Stützbereiche 34 Gewichtskräfte F aufgenommen werden, die auf das Stützelement 1 einwirken.

Dadurch dass die beiden Längsführungen 3a, 3b quer zur Verstellrichtung x horizontal voneinander beabstandet an jeweils einem seitlichen Rand des Basiselementes 1 bzw. des Stützelementes 2 liegen, wird durch die im Bereich jener Längsführungen 3a, 3b erfolgende Aufnahme und Weiterleitung von Gewichtskräften F in das Sitzgestell ein Verkippen des Stützelementes 2 um eine in Verstellrichtung x verlaufende Achse aufgrund einer ungleichmäßigen Belastung des Stützelementes 2 mit Gewichtskräften vermieden.

Neben der durch die beiden Längsführungen 3a, 3b gebildeten ersten Führungseinrichtung 3 ist eine zweite Führungseinrichtung 4 vorgesehen, über die das Stützelement 2 ebenfalls in Verstellrichtung x verschieblich am Basiselement 1 gelagert ist. Die zweite Führungseinrichtung 4 ist als eine Schienenführung ausgestaltet, die durch zwei Führungsprofile in Form von Führungsschienen 41, 42 (im Querschnitt im Wesentlichen U-förmige Profilteile mit abgewinkelten Enden) gebildet wird.

Jede der beiden durch ein Profilteil gebildeten Führungsschienen 41, 42 weist einen Basisbereich 410 bzw. 420, zwei hiervon im Wesentlichen senkrecht abstehende Schenkel 411, 412 bzw. 421, 422 und zwei an den freien Enden des jeweiligen Schenkels 411, 412 bzw. 421, 422 abgewinkelte Endabschnitte 413, 414 bzw. 423, 424 auf.

Die eine (erste) Führungsschiene 41 ist einstückig am Basisteil 1 ausgeformt und die andere (zweite) Führungsschiene 42 ist am Stützelement 2 befestigt. Die beiden Führungsschienen 41, 42 sind so zueinander angeordnet, dass sie einander umgreifen, wobei deren Basisflächen 410, 420 ebenso unmittelbar nebeneinander verlaufen wie jeweils paarweise zwei seitliche Schenkel 411, 421 bzw. 412, 422 und jeweils zwei abgewinkelte Endabschnitte 413, 423 bzw. 414, 424 der beiden Führungsschienen 41, 42.

Zusätzlich sind an den abgewinkelten Endabschnitten 413, 414 der ersten Führungsschiene 41 Befestigungselemente 46, 47 vorgesehen, an denen - bevorzugt aus Kunststoff - bestehende Gleitführungselemente 43, 44 befestigt sind. Diese übergreifen die abgewinkelten Endabschnitte 423, 424 der zweiten Führungsschiene 42 derart, dass diese zwischen den abgewinkelten Endabschnitten 413, 414 der ersten Führungsschiene 41 und den dort vorgesehenen Gleitführungselementen 43, 44 unverlierbar aufgenommen und geführt sind.

Die beiden Führungsschienen 41, 42 sind so ausgebildet, dass sie entlang der horizontalen Querachse y, also entlang einer senkrecht sowohl zur Verstellrichtung x als auch zur Wirkrichtung z der Gewichtskräfte F senkrecht verlaufenden Richtung, im Wesentlichen spielfrei ineinander greifen. Hierdurch wird bei Einstellung des Auszugs des Stützelementes 1 bezüglich des Basiselementes 2 (in eine Position zwischen dem in den Figuren 1a bis 1e dargestellten minimalen Auszug und dem in den Figuren 2a bis 2d dargestellten maximalen Auszug) eine definierte, klapperfreie Führung sichergestellt.

Die aus Kunststoff bestehenden Gleitführungselemente 43, 44 können auch dazu dienen, die beiden Führungsschienen 41, 42 gegeneinander zu verspannen. Hierbei wird vorliegend konstruktiv durch die Anbindung der Gleitführungselemente 43, 44 an der ersten Führungsschiene 41 sichergestellt, dass die Verspannung der zweiten Führungsschiene 42 gegen die erste Führungsschiene 41 mittels der Gleitführungselemente 43, 44 nicht zu einer Überbestimmung des Systems führt; denn die beiden Führungsschienen 41, 42 könnend sich ja (in Wirkrichtung z der Gewichtskräfte F) zusätzlich auch an ihren Basisflächen 410, 420 aneinander abstützen. Die Vermeidung der Überbestimmung wird dadurch erreicht, dass zur Verspannung der zweiten Führungsschiene 42 gegen die erste Führungsschiene 41 die Gleitführungselemente 43, 44 mit der zur Verspannung vorgesehenen Kraft (entlang der Wirkrichtung z der Gewichtskräfte F) gegen die zweite Schiene 42 gedrückt werden; dabei sind sie auf den zugeordneten Befestigungselementen 46, 47 der ersten Führungsschiene 1 gelagert. Wenn die beiden aus (Kunststoff bestehenden) Gleitführungselemente 43, 44 mit der vorgesehenen Spannung auf die zweite Führungsschiene 42 einwirken, werden sie an der ersten Führungsschiene 41 durch Heißverprägen (Verschmelzen) mit den zugeordneten Befestigungselementen 46, 47 an der (aus Kunststoff bestehenden) ersten Führungsschiene 41 festgelegt. Die Befestigungselemente 46, 47 werden hierzu bevorzugt durch Stifte gebildet, die zugeordnete Öffnungen der Gleitführungselemente 43, 44 durchgreifen und deren freie Endabschnitte beim Heißverprägen angeschmolzen werden. Mit dieser Befestigungsmethode können Blechdickentoleranzen der aus Blech bestehenden zweiten Führungsschiene 42 ausgeglichen werden; und es lässt sich eine Überbestimmung der Führungsschienenanordnung 41, 42 zuverlässig vermeiden.

Die im Wesentlichen spielfreie zweite Führungseinrichtung 4 bildet eine lineare Einpunktführung, die durch die vorbeschriebene Ausbildung und Anordnung der ersten Führungseinrichtung 3 von der Wirkung der im Normalgebrauch der Sitztiefenverstellung auftretenden Gewichtskräfte F zumindest teilweise entlastet ist. Die Gefahr eines Verklemmens des Systems durch Überbestimmung wird hierbei dadurch vermieden, dass die beiden Längsführungen 3a, 3b der ersten Führungseinrichtung 3 entlang der horizontalen Querrichtung y ein hinreichendes Spiel aufweisen.

Im Ergebnis wird so eine definierte Führung des Führungselementes 2 bezüglich des Basiselementes 1 in Verstellrichtung x gewährleistet, ohne dass die Gefahr eines Verklemmens der Anordnung aufgrund einer Überbestimmung des Systems besteht, wobei gleichzeitig auch ein Verkippen des Stützelementes 2 um eine in Verstellrichtung x verlaufende Achse bei einer ungleichmäßigen Belastung des Stützelementes 2 mit Gewichtskräften F ausgeschlossen ist.

Zur Betätigung der durch das Basiselement 1 und das Stützelement 2 gebildeten Sitzkissentiefenverstellung ist ein Betätigungsgriff 6 in Form eines Betätigungshebels vorgesehen, der um eine Achse 60 schwenkbar an der sitzelementseitigen Führungsschiene 42 und damit indirekt am Sitzelement 2 selbst angelenkt ist. Wird zum Verschieben des Sitzelementes 2 bezüglich des Basiselementes 1 in Verstellrichtung x eine in jener Richtung wirkende Kraft auf den Betätigungshebel 6 ausgeübt, so führt dieser gleichzeitig eine Schwenkbewegung um seine Schwenkachse 60 aus und wirkt hierbei über einen am Betätigungshebel 6 vorgesehenen Fortsatz 65 auf einen Mitnehmer 55 der Verriegelungsmittel 5 ein, mittels derer das Stützelement 2 bezüglich des Basiselements 1 in der jeweils eingestellten Relativposition verriegelbar ist.

Somit kann durch manuelle Krafteinwirkung auf den Betätigungshebel 6 in Verstellrichtung x gleichzeitig eine Entriegelung der Verriegelungsmittel 5 erfolgen und eine daran anschließende Verstellbewegung des Stützelementes 2 bezüglich des Basiselementes 1 entlang der Verstellrichtung x.

Die Verstellmittel 5 umfassen ein als Welle ausgebildetes Verriegelungselement 50, das um eine parallel zur Verstellrichtung x gelagerte Achse verschwenkbar ist und hierzu mit seinen Enden an jeweils einer von der stützelementseitigen Führungsschiene 42 abstehenden Lagerlasche 40 angelenkt ist. Die schwenkbar gelagerte Verriegelungswelle 50 der Verriegelungsmittel 5 ist also ebenso wie der Betätigungshebel 6 dem Stützelement 2 zugeordnet und gemeinsam mit diesem in Verstellrichtung x verschiebbar. Die Verriegelungswelle 50 erstreckt sich dabei in dem durch die beiden Führungsschienen 41, 42 definierten Hohlraum, d. h. zwischen den einander gegenüberliegenden seitlichen Schenkelpaaren 411, 421; 412, 422 der beiden Führungsschienen 41, 42.

Am äußeren Umfang des Verriegelungselementes in Form einer Verriegelungswelle 50 sind drei Gruppen 50, 52, 53 von jeweils drei Sperrzähnen angeordnet und stehen in radialer Richtung von der Verriegelungswelle 50 ab. Die Sperrzähne einer Gruppe 51 bzw. 52 bzw. 53 sind dabei jeweils in Erstreckungsrichtung der Verriegelungswelle 50, also in Verstellrichtung x, voneinander beabstandet und die einzelnen Gruppen 51, 52, 53 an Sperrzähnen sind wiederum mit einer größeren Distanz in jener Richtung x voneinander beabstandet.

Weiterhin steht von der Verriegelungswelle ein Mitnehmer 55 ab, der mit dem Fortsatz 65 des Betätigungshebels 6 derart in Wirkverbindung steht, dass bei einem Verschwenken des Betätigungshebels 6, dessen Fortsatz 65 auf den Mitnehmer 55 der Verriegelungswelle 50 einwirkt und diese zur Entriegelung um ihre in Verstellrichtung x erstreckte Achse verschwenkt. Dies geschieht entgegen der Vorspannkraft eines elastischen Elementes 7 in Form einer Drehfeder, mittels der die Verriegelungswelle 50 in die in den Figuren 1a bis 1e sowie 2a bis 2d gezeigte Verriegelungsposition vorgespannt ist.

In dieser Verriegelungsposition greifen die an der Verriegelungswelle 50 vorgesehenen Gruppen 51, 52, 53 von Sperrzähnen zumindest teilweise in zugeordnete Raststellen 59 in Form von Rastöffnungen ein, die im Basisbereich 410 der basiselementseitigen Führungsschiene 41 vorgesehen sind und damit ortsfest am Basiselement 1 angeordnet sind. Durch den Eingriff der über die Verriegelungswelle 50 am Stützelement 2 angeordneten Sperrzähne in die am Basiselement 1 vorgesehenen Raststellen 59 wird somit eine Verriegelung des Stützelementes 2 bezüglich des Basiselementes 1 erreicht, die einer Verstellung des Stützelementes 2 entlang der Verstellrichtung x entgegensteht.

Dabei durchgreifen die Gruppen 51, 52, 53 an Sperrzähnen der Verriegelungswelle 5 im verriegelten Zustand zusätzlich auch entsprechende Gruppen von Durchgangsöffnungen 56, 57, 58 in der Basisfläche 420 der stützelementseitigen Führungsschiene 42 (zweischnittige Verriegelung). Hierdurch wird der verriegelte Zustand stabilisiert.

Durch die schwenkbare Lagerung der Verriegelungswelle 50 der Verriegelungsmittel 5, welche dementsprechend durch Verschwenken mit den zugeordneten Raststellen 59 in und außer Eingriff bringbar ist, sowie durch die beschriebene zweischnittige Verriegelung wird die Riegelmechanik der Verriegelungsmittel 5 auf Scherung und nicht auf Biegung beansprucht. Hierdurch kann die Verriegelungswelle 50 mit den daran vorgesehenen Gruppen 51, 52, 53 an Sperrzähnen aus Kunststoff ausgeführt sein.

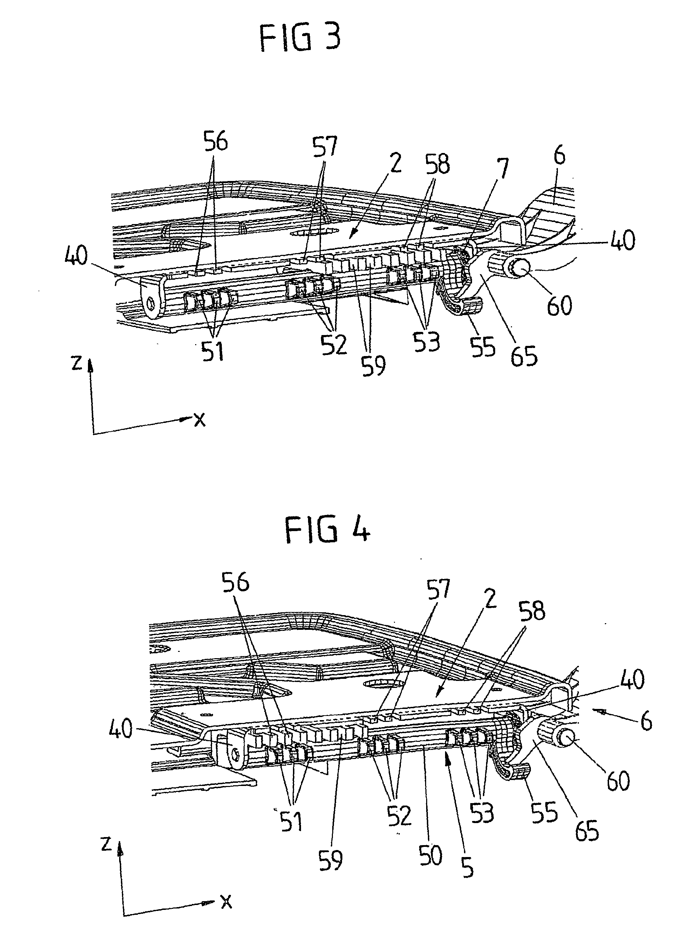

In den Figuren 3 und 4 ist die aus dem Stützelement 2 und dem Basiselement 1 bestehende Sitztiefenverstellung einmal mit minimalem Auszug (Figur 3) und andererseits mit maximalem Auszug (Figur 4) im entriegelten Zustand dargestellt, d. h. nach einer Entriegelung der in den Figuren 1a bis 1e bzw. 2a bis 2d jeweils im verriegelten Zustand dargestellten entsprechenden Anordnung.

Die Entriegelung der Verriegelungsmittel 5 erfolgt sowohl im minimal ausgezogenen Zustand der Sitztiefenverstellung (entsprechend dem Übergang des in den Figuren 1a bis 1e dargestellten Zustandes zu dem in Figur 3 dargestellten Zustand) als auch bei maximalem Auszug (entsprechend dem Übergang des in den Figuren 2a bis 2d gezeigten Zustandes in den in Figur 4 gezeigten Zustand) jeweils dadurch, dass bei einem Verschwenken des Betätigungshebels 6 der Sitztiefenverstellung zugleich auch - wegen des Zusammenwirkens des Fortsatzes 65 des Betätigungshebels 6 mit dem Mitnehmer 55 der Verriegelungswelle 5 - die Verriegelungswelle 5 derart verschwenkt wird, dass deren Gruppen 51, 52, 53 von Sperrzähnen außer Eingriff mit den zugeordneten Raststellen 59 der Verriegelungsmittel 5 geraten. Dieser Zustand, in dem die Sperrzähne der Verriegelungswelle 50 aus den zugeordneten Raststellen 59 ausgehoben sind, ist in den Figuren 3 und 4 im Fall des minimalen Auszuges des Stützelementes 2 bzw. des maximalen Auszuges des Stützelementes 2 dargestellt.

## Patentansprüche

1. Sitztiefenverstellung für einen Kraftfahrzeugsitz mit
- einem sitzgestellfest anzuordnenden Basiselement (1),
- einem längsbeweglich am Basiselement (1) gelagerten Stützelement (2) zum Abstützen eines Sitzbenutzers, wobei im bestimmungsgemäßen Gebrauch des Stützelementes (2) Gewichtskräfte entlang einer Abstützrichtung auf das Stützelement (2) wirken, und
- Führungsmitteln (3, 4), mittels derer das Stützelement (2) am Basiselement (1) entlang einer Verstellrichtung (x) beweglich geführt ist,
**dadurch gekennzeichnet,**
**dass** die Führungsmittel (3, 4) eine erste Führungseinrichtung (3) umfassen, in deren Umgebung sich das Stützelement (2) an dem Basiselement (1) abstützt und an der das Stützelement (2) und das Basiselement (1) mit einem Spiel entlang einer Richtung (y) senkrecht zur Verstellrichtung (x) und zur Abstützrichtung (z) zusammenwirken und dass die Führungsmittel (3, 4) weiterhin eine zweite Führungseinrichtung (4) umfassen, mit der das Stützelement (2) senkrecht zur Verstellrichtung (x) und zur Abstützrichtung (z) im Wesentlichen spielfrei an dem Basiselement (1) geführt ist.

2. Sitztiefenverstellung nach Anspruch 1, **dadurch gekennzeichnet, dass** die zweite Führungseinrichtung (4) entlang einer Richtung (y) senkrecht zur Verstellrichtung (x) und senkrecht zur Abstützrichtung (z) von der ersten Führungseinrichtung (3) beabstandet ist.

3. Sitztiefenverstellung nach Anspruch 1 oder 2, **dadurch gekennzeichnet, dass** die erste Führungseinrichtung (3) zwei quer zur Verstellrichtung (x) voneinander beabstandete Längsführungen (3a, 3b) aufweist, die sich jeweils entlang der Verstellrichtung (x) erstrecken.

4. Sitztiefenverstellung nach Anspruch 2 und 3, **dadurch gekennzeichnet, dass** sich die zweite Führungseinrichtung (4) zwischen den beiden Längsführungen (3a, 3b) in Verstellrichtung (x) erstreckt.

5. Sitztiefenverstellung nach einem der vorhergehenden Ansprüche, **dadurch gekennzeichnet, dass** die erste Führungseinrichtung (3) mindestens ein Führungselement (31) umfasst, das in einer in Verstellrichtung (x) erstreckten Führungsbahn (32) längsbeweglich geführt ist.

6. Sitztiefenverstellung nach Anspruch 4 und 5, **dadurch gekennzeichnet, dass** jede Längsführung (3a, 3b) ein Führungselement (31) umfasst, das in Verstellrichtung (x) beweglich in einer Führungsbahn (32) geführt ist.

7. Sitztiefenverstellung nach Anspruch 5 oder 6, **dadurch gekennzeichnet, dass** die Führungsbahn (32) durch eine Führungskulisse gebildet wird, in die das Führungselement (31) formschlüssig eingreift.

8. Sitztiefenverstellung nach einem der vorhergehenden Ansprüche, **dadurch gekennzeichnet, dass** sich entlang der ersten Führungseinrichtung (3) mindestens ein Stützbereich (34) in Verstellrichtung (x) erstreckt, über den sich das Stützelement (2) an dem Basiselement (1) in Abstützrichtung (z) abstützen kann.

9. Sitztiefenverstellung nach einem der vorhergehenden Ansprüche, **dadurch gekennzeichnet, dass** die zweite Führungseinrichtung (4) zwei in Verstellrichtung (x) zueinander bewegliche Führungsprofile (41, 42) umfasst, die in einer Richtung (y) quer zur Verstellrichtung (x) und zur Abstützrichtung (z) spielfrei ineinander greifen.

10. Sitztiefenverstellung nach Anspruch 9, **dadurch gekennzeichnet, dass** die Führungsprofile (41, 42) im Querschnitt im Wesentlichen U-förmig sind.

11. Sitztiefenverstellung nach Anspruch 9 oder 10, **dadurch gekennzeichnet, dass** die Führungsprofile (41, 42) jeweils abgewinkelte Endabschnitte (413, 414; 423, 424) aufweisen.

12. Sitztiefenverstellung nach Anspruch 11, **dadurch gekennzeichnet, dass** eines der Führungsprofile (41, 42) mit seinen abgewinkelten Endabschnitten (423, 424) an den abgewinkelten Endabschnitten (413, 414) des anderen Führungsprofils (41) vorgesehene Gleitführungselemente (43, 44) hintergreift, so dass das eine Führungsprofil (42) mit seinen abgewinkelten Endabschnitten (423, 424) zwischen den abgewinkelten Endabschnitten (413, 414) des anderen Führungsprofiles (41) und den dort vorgesehenen Gleitführungselementen (43, 44) aufgenommen ist.

13. Sitztiefenverstellung nach einem der Ansprüche 9 bis 12, **dadurch gekennzeichnet, dass** die beiden Führungsprofile (41, 42) zusätzlich in Abstützrichtung (z) spielfrei ineinander greifen.

14. Sitztiefenverstellung nach einem der vorhergehenden Ansprüche, **dadurch gekennzeichnet, dass** Mittel (5) zur Verriegelung einer zuvor eingestellten Position des Stützelementes (2) bezüglich des Basiselementes (1) vorgesehen sind.

15. Sitztiefenverstellung nach Anspruch 14, **dadurch gekennzeichnet, dass** zum Verriegeln und Entriegeln des Stützelementes (2) bezüglich des Basiselementes (1) ein schwenkbar gelagertes Verriegelungselement (50) vorgesehen ist.

16. Sitztiefenverstellung nach Anspruch 15, **dadurch gekennzeichnet, dass** das Verriegelungselement (50) um eine in Verstellrichtung (x) erstreckte Achse verschwenkbar gelagert ist.

17. Sitztiefenverstellung nach einem der Ansprüche 14 bis 16, **dadurch gekennzeichnet, dass** das Verriegelungselement (50) mit mindestens einem Sperrzahn versehen ist, der zum Ver- und Entriegeln mit mindestens einer einer Mehrzahl in Verstellrichtung (x) hintereinander angeordneter Raststellen (59) in und außer Eingriff bringbar ist

18. Sitztiefenverstellung nach Anspruch 17, **dadurch gekennzeichnet, dass** die Raststellen (59) durch Rastöffnungen gebildet werden.

19. Sitztiefenverstellung nach Anspruch 9 und Anspruch 17 oder 18, **dadurch gekennzeichnet, dass** die Raststellen (59) an einem der Führungsprofile (41, 42) vorgesehen sind.

20. Sitztiefenverstellung nach Anspruch 10 und 19, **dadurch gekennzeichnet, dass** die Raststellen (59) an der Basisfläche (410) des im Querschnitt U-förmigen Führungsprofiles (41) vorgesehen sind.

21. Sitztiefenverstellung nach Anspruch 19 oder 20, **dadurch gekennzeichnet, dass** das Verriegelungselement an dem relativ zu dem mit den Raststellen (59) versehenen Führungsprofil (41) beweglichen Führungsprofil (42) gelagert ist.

22. Sitztiefenverstellung nach Anspruch 21, **dadurch gekennzeichnet, dass** das Verriegelungselement (50) in einem von den Führungsprofilen (41, 42) definierten Hohlraum angeordnet ist.

23. Sitztiefenverstellung nach Anspruch 10 und 22, **dadurch gekennzeichnet, dass** sich das Verriegelungselement (50) zwischen den Schenkeln (411, 412; 421, 422) der im Querschnitt U-förmigen Führungsprofile (41, 42) erstreckt.

24. Sitztiefenverstellung nach einem der Ansprüche 21 bis 23, **dadurch gekennzeichnet, dass** das an dem Verriegelungselement (50) lagernde Führungsprofil (42) Durchgangsöffnungen (56, 57, 58) aufweist, in die das Sperrelement (50) im verriegelten Zustand mit Sperrzähnen eingreifen kann.

25. Sitztiefenverstellung nach Anspruch 10 und 24, **dadurch gekennzeichnet, dass** die Durchgangsöffnungen (56, 57, 58) in einer Basisfläche (420) des besagten Führungsprofiles (42) vorgesehen sind.

26. Sitztiefenverstellung nach einem der Ansprüche 14 bis 25, **dadurch gekennzeichnet, dass** die Verriegelungsmittel (5) in Richtung auf den verriegelten Zustand des Stützelementes (2) und des Basiselementes (1) vorgespannt sind.

27. Sitztiefenverstellung nach Anspruch 15 und 26, **dadurch gekennzeichnet, dass** zur Verspannung der Verriegelungsmittel (5) ein elastisches Element (7) auf das Verriegelungselement (50) einwirkt.

28. Sitztiefenverstellung nach einem der vorhergehenden Ansprüche, **dadurch gekennzeichnet, dass** dem Stützelement (2) zur Einleitung einer Verstellkraft eine manuelle Betätigungseinrichtung zugeordnet ist.

29. Sitztiefenverstellung nach Anspruch 28, **dadurch gekennzeichnet, dass** die manuelle Betätigungseinrichtung einen Betätigungsgriff (6) umfasst.

30. Sitztiefenverstellung nach Anspruch 29, **dadurch gekennzeichnet, dass** der Betätigungsgriff (6) am Stützelement (2) angeordnet ist.

31. Sitztiefenverstellung nach Anspruch 14 und Anspruch 29 oder 30, **dadurch gekennzeichnet, dass** der Betätigungsgriff (6) beweglich gelagert und derart mit den Verstellmitteln (5) gekoppelt ist, dass bei einer Krafteinwirkung auf den Betätigungsgriff (6) in Verstellrichtung (x) der Betätigungsgriff (6) die Verriegelungsmittel (5) entriegelt.

32. Sitztiefenverstellung nach Anspruch 15 und 31, **dadurch gekennzeichnet, dass** der Betätigungsgriff (6) über einen Fortsatz (65) mit dem Verriegelungselement (50) in Wirkverbindung steht, so dass bei Kraftausübung auf den Betätigungsgriff (6) in Verstellrichtung (x) das Verriegelungselement (50) entriegelt wird.

33. Sitztiefenverstellung nach Anspruch 31 oder 32, **dadurch gekennzeichnet, dass** der Betätigungsgriff (6) als ein schwenkbar gelagerter Betätigungshebel ausgebildet ist.

34. Sitztiefenverstellung nach einem der vorhergehenden Ansprüche, **dadurch gekennzeichnet, dass** das Stützelement (2) als eine Schenkelstütze für einen Kraftfahrzeugsitz ausgebildet ist.

35. Kraftfahrzeugsitz mit
- einem Sitzträger (T) zur Aufnahme eines Sitzpolsters (P1), auf dem ein Sitzbenutzer Platz nehmen kann, und
- einer Schenkelstütze (S) mit einem Zusatzpolster (Z),
wobei die Schenkelstütze (S) als Sitztiefenverstellung ein Stützelement (2) aufweist, das an einem Basiselement (1) des Sitzträgers (T) längsbeweglich gelagert ist, so dass die Lage der Schenkelstütze (S) entlang einer Verstellrichtung (x) eingestellt werden kann, um die effektive Länge (L) eines durch das Sitzpolster (P1) und das Zusatzpolster (Z) gebildeten Sitzkissens einstellen zu können,
**gekennzeichnet durch**
eine Ausbildung der Sitztiefenverstellung nach einem der vorhergehenden Ansprüche.

## Claims

1. A device for adjusting the seat depth of a motor vehicle seat, with
- a base element (1) to be arranged in a manner fixed on the seat framework,
- a supporting element (2) which is mounted in a longitudinally movable manner on the base element (1) and is intended for supporting a seat user, wherein, during correct use of the supporting element (2), the weight acts on the supporting element (2) in a supporting direction, and
- guide means (3, 4), by means of which the supporting element (2) is guided movably on the base element (1) along an adjustment direction (x),
**characterized in that** the guide means (3, 4) comprise a first guide mechanism (3), in the vicinity of which the supporting element (2) is supported on the base element (1) and at which the supporting element (2) and the base element (1) interact with play in a direction (y) perpendicular to the adjustment direction (x) and to the supporting direction (z), and **in that** the guide means (3, 4) furthermore comprise a second guide mechanism (4) with which the supporting element (2) is guided on the base element (1) in an essentially play-free manner perpendicular to the adjustment direction (x) and to the supporting direction (z).

2. The device for adjusting the seat depth as claimed in claim 1, **characterized in that** the second guide mechanism (4) is spaced apart from the first guide mechanism (3) in a direction (y) perpendicular to the adjustment direction (x) and perpendicular to the supporting direction (z).

3. The device for adjusting the seat depth as claimed in claim 1 or 2, **characterized in that** the first guide mechanism (3) has two longitudinal guides (3a, 3b) which are spaced apart from each other transversely with respect to the adjustment direction (x) and each extend in the adjustment direction (x).

4. The device for adjusting the seat depth as claimed in claims 2 and 3, **characterized in that** the second guide mechanism (4) extends between the two longitudinal guides (3a, 3b) in the adjustment direction (x).

5. The device for adjusting the seat depth as claimed in one of the preceding claims, **characterized in that** the first guide mechanism (3) comprises at least one guide element (31) which is guided in a longitudinally movable manner in a guide track (32) extending in the adjustment direction (x).

6. The device for adjusting the seat depth as claimed in claims 4 and 5, **characterized in that** each longitudinal guide (3a, 3b) comprises a guide element (31) which is guided movably in the adjustment direction (x) in a guide track (32).

7. The device for adjusting the seat depth as claimed in claim 5 or 6, **characterized in that** the guide track (32) is formed by a guide slot in which the guide element (31) engages in a positive-locking manner.

8. The device for adjusting the seat depth as claimed in one of the preceding claims, **characterized in that** at least one supporting region (34) extends along the first guide mechanism (3) in the adjustment direction (x), via which supporting region the supporting element (2) can be supported on the base element (1) in the supporting direction (z).

9. The device for adjusting the seat depth as claimed in one of the preceding claims, **characterized in that** the second guide mechanism (4) comprises two guide profiles (41, 42) which are movable with respect to each other in the adjustment direction (x) and intermesh in a play-free manner in a direction (y) transversely with respect to the adjustment direction (x) and to the supporting direction (z).

10. The device for adjusting the seat depth as claimed in claim 9, **characterized in that** the guide profiles (41, 42) are essentially U-shaped in cross section.

11. The device for adjusting the seat depth as claimed in claim 9 or 10, **characterized in that** the guide profiles (41, 42) each have angled end sections (413, 414; 423, 424).

12. The device for adjusting the seat depth as claimed in claim 11, **characterized in that** one of the guide profiles (41, 42) engages by means of its angled end sections (423, 424) behind sliding guide elements (43, 44) provided on the angled end sections (413, 414) of the other guide profile (41), and therefore the one guide profile (42) is held by means of its angled end sections (423, 424) between the angled end sections (413, 414) of the other guide profile (41) and the sliding guide elements (43, 44) provided there.

13. The device for adjusting the seat depth as claimed in one of claims 9 to 12, **characterized in that** the two guide profiles (41, 42) additionally intermesh in a play-free manner in the supporting direction (z).

14. The device for adjusting the seat depth as claimed in one of the preceding claims, **characterized in that** means (5) for locking a previously set position of the supporting element (2) with respect to the base element (1) are provided.

15. The device for adjusting the seat depth as claimed in claim 14, **characterized in that** a pivotably mounted locking element (50) is provided for locking and unlocking the supporting element (2) with respect to the base element (1).

16. The device for adjusting the seat depth as claimed in claim 15, **characterized in that** the locking element (50) is mounted pivotably about an axis extending in the adjustment direction (x).

17. The device for adjusting the seat depth as claimed in one of the claims 14 to 16, **characterized in that** the locking element (50) is provided with at least one locking tooth which, for the locking and unlocking, can be brought into and out of engagement with at least one of a plurality of latching points (59) arranged consecutively in the adjustment direction (x).

18. The device for adjusting the seat depth as claimed in claim 17, **characterized in that** the latching points (59) are formed by latching openings.

19. The device for adjusting the seat depth as claimed in claim 9 and claim 17 or 18, **characterized in that** the latching points (59) are provided on one of the guide profiles (41, 42).

20. The device for adjusting the seat depth as claimed in claims 10 and 19, **characterized in that** the latching points (59) are provided on the base surface (410) of the guide profile (41) which is U-shaped in cross section.

21. The device for adjusting the seat depth as claimed in claim 19 or 20, **characterized in that** the locking element is mounted on the guide profile (42) which is movable relative to the guide profile (41) provided with the latching points (59).

22. The device for adjusting the seat depth as claimed in claim 21, **characterized in that** the locking element (50) is arranged in a cavity defined by the guide profiles (41, 42).

23. The device for adjusting the seat depth as claimed in claims 10 and 22, **characterized in that** the locking element (50) extends between the limbs (411, 412; 421, 422) of the guide profiles (41, 42) which are U-shaped in cross section.

24. The device for adjusting the seat depth as claimed in one of claims 21 to 23, **characterized in that** the guide profile (42) which is mounted on the locking element (50)has passage openings (56, 57, 58) in which the locking element (50) can engage by means of locking teeth in the locked state.

25. The device for adjusting the seat depth as claimed in claims 10 and 24, **characterized in that** the passage openings (56, 57, 58) are provided in a base surface (420) of said guide profile (42).

26. The device for adjusting the seat depth as claimed in one of claims 14 to 25, **characterized in that** the locking means (5) are prestressed in the direction of the locked state of the supporting element (2) and the base element (1).

27. The device for adjusting the seat depth as claimed in claims 15 and 26, **characterized in that**, in order to prestress the locking means (5), an elastic element (7) acts on the locking element (50).

28. The device for adjusting the seat depth as claimed in one of the preceding claims, **characterized in that** the supporting element (2) is assigned a manual actuating mechanism for introducing an adjustment force.

29. The device for adjusting the seat depth as claimed in claim 28, **characterized in that** the manual actuating mechanism comprises an actuating handle (6).

30. The device for adjusting the seat depth as claimed in claim 29, **characterized in that** the actuating handle (6) is arranged on the supporting element (2).

31. The device for adjusting the seat depth as claimed in claim 14 and claim 29 or 30, **characterized in that** the actuating handle (6) is mounted movably and is coupled to the adjustment means (5) in such a manner that, when force is applied to the actuating handle (6) in the adjustment direction (x), the actuating handle (6) unlocks the locking means (5).

32. The device for adjusting the seat depth as claimed in claims 15 and 31, **characterized in that** the actuating handle (6) is operatively connected to the locking element (50) via an extension (65) such that, when force is actuated on the actuating handle (6) in the adjustment direction (x), the locking element (50) is unlocked.

33. The device for adjusting the seat depth as claimed in claim 31 or 32, **characterized in that** the actuating handle (6) is designed as a pivotably mounted actuating lever.

34. The device for adjusting the seat depth as claimed in one of the preceding claims, **characterized in that** the supporting element (2) is designed as a leg support for a motor vehicle seat.

35. A motor vehicle seat with
- a seat support (T) for receiving a seat pad (P1) on which a seat user can sit, and
- a leg support (S) with an additional pad (Z),
wherein the leg support (S), as the device for adjusting the seat depth, has a supporting element (2) which is mounted in a longitudinally movable manner on a base element (1) of the seat support (T) such that the position of the leg support (S) in an adjustment direction (x) can be set in order to be able to set the effective length (L) of a seat cushion formed by the seat pad (P1) and the additional pad (Z),
**characterized by** a design of the device for adjusting the seat depth as claimed in one of the preceding claims.

## Revendications

1. Dispositif de réglage en profondeur pour un siège de véhicule automobile, comprenant
- un élément de base (1) à agencer solidairement avec le châssis de siège,
- un élément de soutien (2) monté mobile longitudinalement sur l'élément de base (1) pour soutenir un utilisateur du siège, de sorte que lors de l'utilisation de l'élément de soutien (2) conformément à sa destination, les forces pondérales agissent le long d'une direction de soutien sur l'élément de soutien (2), et
- des moyens de guidage (3, 4) au moyen desquels l'élément de soutien (2) est guidé de façon mobile sur l'élément de base (1) le long d'une direction de réglage (x),
**caractérisé en ce que**
les moyens de guidage (3, 4) comprennent un premier dispositif de guidage (3) dans l'environnement duquel l'élément de soutien (2) est soutenu sur l'élément de base (1) et contre lequel l'élément de soutien (2) et l'élément de base (1) coopèrent avec un jeu le long d'une direction (y) perpendiculaire à la direction de réglage (x) et à la direction de soutien (z), et **en ce que** les moyens de guidage (3, 4) comprennent en outre un second dispositif de guidage (4) au moyen duquel l'élément de soutien (2) est guidé sensiblement sans jeu sur l'élément de base (1) perpendiculairement à la direction de réglage (x) et à la direction de soutien (z).

2. Dispositif de réglage en profondeur selon la revendication 1, **caractérisé en ce que** le second dispositif de guidage (4) est écarté du premier dispositif de guidage (3) le long d'une direction (y) perpendiculaire à la direction de réglage (x) et perpendiculaire à la direction de soutien (z).

3. Dispositif de réglage en profondeur selon la revendication 1 ou 2, **caractérisé en ce que** le premier dispositif de guidage (3) comprend deux guidages longitudinaux (3a, 3b) écartés l'un de l'autre perpendiculairement à la direction de réglage (x), qui s'étendent chacun le long de la direction de réglage (x).

4. Dispositif de réglage en profondeur selon la revendication 2 et 3, **caractérisé en ce que** le second dispositif de guidage (4) s'étend entre les deux guidages longitudinaux (3a, 3b) dans la direction de réglage (x).

5. Dispositif de réglage en profondeur selon l'une des revendications précédentes, **caractérisé en ce que** le premier dispositif de guidage (3) comprend au moins un élément de guidage (31) qui est guidé avec possibilité de déplacement longitudinal dans une voie de guidage (32) qui s'étend en direction de réglage (x).

6. Dispositif de réglage en profondeur selon la revendication 4 et 5, **caractérisé en ce que** chaque guidage longitudinal (3a, 3b) comprend un élément de guidage (31) qui est guidé de façon mobile dans une voie de guidage (32) dans la direction de réglage (x).

7. Dispositif de réglage en profondeur selon la revendication 5 ou 6, **caractérisé en ce que** la voie de guidage (30) est formée par une glissière de guidage dans laquelle l'élément de guidage (31) s'engage en coopération de formes.

8. Dispositif de réglage en profondeur selon l'une des revendications précédentes, **caractérisé en ce que** le long du premier dispositif de guidage (3) au moins une zone de soutien (34) s'étend dans la direction de réglage (x), via laquelle l'élément de soutien (2) peut être soutenu sur l'élément de base (1) dans la direction de soutien (z).

9. Dispositif de réglage en profondeur selon l'une des revendications précédentes, **caractérisé en ce que** le second dispositif de guidage (4) comprend deux profilés de guidage (41, 42) mobiles l'un par rapport à l'autre en direction de réglage (x), et s'engageant l'un dans l'autre sans jeu dans une direction (y) perpendiculaire à la direction de réglage (x) et à la direction de soutien (z).

10. Dispositif de réglage en profondeur selon la revendication 9, **caractérisé en ce que** les profilés de guidage (41, 42) ont en section transversale sensiblement une forme en U.

11. Dispositif de réglage en profondeur selon la revendication 9 ou 10, **caractérisé en ce que** les profilés de guidage (41, 42) présentent chacun des tronçons terminaux (413, 414 ; 423, 424) coudés.

12. Dispositif de réglage en profondeur selon la revendication 11, **caractérisé en ce que** l'un des profilés de guidage (41, 42) engage avec ses tronçons terminaux (423, 424) coudés, par l'arrière des éléments de guidage coulissants (43, 44) prévus sur les tronçons terminaux (413, 414) coudés de l'autre profilé de guidage (41), de telle manière que l'un des profilés de guidage (42) avec ses tronçons terminaux (423, 424) coudés est reçu entre les tronçons terminaux (413, 414) coudés de l'autre profilé de guidage (41) et les éléments de guidage coulissants (43, 44) prévus à cet endroit.

13. Dispositif de réglage en profondeur selon l'une des revendications 9 à 12, **caractérisé en ce que** les deux profilés de guidage (41, 42) s'engagent additionnellement l'un dans l'autre sans jeu dans la direction de soutien (z).

14. Dispositif de réglage en profondeur selon l'une des revendications précédentes, **caractérisé en ce qu'**il est prévu des moyens (5) pour le verrouillage d'une position préalablement établie de l'élément de soutien (2) par rapport à l'élément de base (1).

15. Dispositif de réglage en profondeur siège selon la revendication 14, **caractérisé en ce que** pour le verrouillage et le déverrouillage de l'élément de soutien (2) par rapport à l'élément de base (1) il est prévu un élément de verrouillage monté pivotant (50).

16. Dispositif de réglage en profondeur selon la revendication 15, **caractérisé en ce que** l'élément de verrouillage (50) est monté en pivotement autour d'un axe s'étendant dans la direction de réglage (x).

17. Dispositif de réglage en profondeur selon l'une des revendications 14 à 16, **caractérisé en ce que** l'élément de verrouillage (50) est pourvu d'au moins une dent de blocage qui peut être amenée, pour le verrouillage et le déverrouillage, en engagement ou hors d'engagement par rapport à au moins un emplacement d'enclenchement (59) parmi une pluralité d'emplacements d'enclenchement (59) agencés les uns derrière les autres en direction de réglage (x).

18. Dispositif de réglage en profondeur selon la revendication 17, **caractérisé en ce que** les emplacements d'enclenchement (59) sont formés par des ouvertures d'enclenchement.

19. Dispositif de réglage en profondeur selon la revendication 9 et la revendication 17 ou 18, **caractérisé en ce que** les emplacements d'enclenchement (59) sont prévus sur l'un des profilés de guidage (41,42).

20. Dispositif de réglage en profondeur selon la revendication 10 et 19, **caractérisé en ce que** les emplacements d'enclenchement (59) sont prévus au niveau de la surface de base (410) du profilé de guidage (41) à section transversale en forme de U.

21. Dispositif de réglage en profondeur selon la revendication 19 et 20, **caractérisé en ce que** l'élément de verrouillage est monté sur le profilé de guidage (42) mobile par rapport au profilé de guidage (41) pourvu des emplacements d'enclenchement (59).

22. Dispositif de réglage en profondeur selon la revendication 21, **caractérisé en ce que** l'élément de verrouillage (50) est agencé dans une cavité définie par les profilés de guidage (41, 42).

23. Dispositif de réglage en profondeur selon la revendication 10 et 22, **caractérisé en ce que** l'élément de verrouillage (50) s'étend entre les branches (411, 412 ; 421, 422) des profilés de guidage (41, 42) à section transversale en forme de U.

24. Dispositif de réglage en profondeur selon l'une des revendications 21 à 23, **caractérisé en ce que** le profilé de guidage (42) monté sur l'élément de verrouillage (50) possède des ouvertures traversantes (56, 57, 58) dans lesquels l'élément de blocage (50) peut s'engager avec des dents de blocage dans l'état verrouillé.

25. Dispositif de réglage en profondeur selon la revendication 10 et 24, **caractérisé en ce que** les ouvertures traversantes (56, 57, 58) sont prévues dans une surface de base (420) dudit profilé de guidage (42).

26. Dispositif de réglage en profondeur selon l'une des revendications 14 à 25, **caractérisé en ce que** les moyens de verrouillage (5) sont précontraints en direction de l'état verrouillé de l'élément de soutien (2) et de l'élément de base (1).

27. Dispositif de réglage en profondeur selon la revendication 15 et 26, **caractérisé en ce qu'**un élément élastique (7) agit sur l'élément de verrouillage (50) pour la mise en précontrainte des moyens de verrouillage (5).

28. Dispositif de réglage en profondeur selon l'une des revendications précédentes, **caractérisé en ce qu'**un dispositif d'actionnement manuel est associé à l'élément de soutien (2) pour l'application d'une force de réglage.

29. Dispositif de réglage en profondeur selon la revendication 28, **caractérisé en ce que** le dispositif d'actionnement manuel comprend une poignée d'actionnement (6).

30. Dispositif de réglage en profondeur selon la revendication 29, **caractérisé en ce que** la poignée d'actionnement (6) est agencée sur l'élément de soutien (2).

31. Dispositif de réglage en profondeur selon la revendication 14 et la revendication 29 ou 30, **caractérisé en ce que** la poignée d'actionnement (6) est montée mobile et couplée au moyen de réglage (5) de telle façon que, lors de l'application d'une force sur la poignée d'actionnement (6) dans la direction de réglage (x), la poignée d'actionnement (6) déverrouille les moyens de verrouillage (5).

32. Dispositif de réglage en profondeur selon la revendication 15 et 31, **caractérisé en ce que** la poignée d'actionnement (6) est en coopération d'action avec l'élément de verrouillage (50) via un prolongement (65), de sorte que lors de l'application d'une force sur la poignée d'actionnement (6) en direction de réglage (x) l'élément de verrouillage (50) est déverrouillé.

33. Dispositif de réglage en profondeur selon la revendication 31 ou 32, **caractérisé en ce que** la poignée d'actionnement (6) est réalisée sous forme d'un levier d'actionnement monté pivotant.

34. Dispositif de réglage en profondeur selon l'une des revendications précédentes, **caractérisé en ce que** l'élément de soutien (2) est réalisé sous forme de soutien pour les cuisses dans un siège de véhicule automobile.

35. Siège de véhicule automobile comprenant
- un porte-siège (T) pour recevoir un rembourrage de siège (P1) sur lequel peut prendre place un utilisateur du siège, et
- un soutien pour les cuisses (S) avec un rembourrage additionnel (Z), dans lequel le soutien pour les cuisses (S) comprend, à titre de dispositif de réglage en profondeur pour le siège, un élément de soutien (2) qui est monté mobile longitudinalement sur un élément de base (1) du porte-siège (T) de sorte que la position du soutien pour les cuisses (S) peut être réglée le long d'une direction de réglage (x), afin de pouvoir régler la longueur effective (L) d'un coussin de siège formé par le rembourrage de siège (P1) et par le rembourrage additionnel (Z),
**caractérisé en ce que**
le dispositif de réglage en profondeur pour le siège est réalisé selon l'une des revendications précédentes.
